# EUROPEAN PATENT APPLICATION

(11) **EP 4 535 301 A1**
(43) Date of publication of application: **09.04.2025**
(21) Application number: 24202451.1
(22) Date of filing: 25.09.2024
(51) Int. Cl.: G06V 20/40, H04L 9/06, H04N 23/00, H04N 23/11, G06F 21/64

(54) **IMAGING DEVICE, IMAGING METHOD, AND STORAGE MEDIUM**

(30) Priority: 02.10.2023 JP 2023171446
(71) Applicant: CANON KABUSHIKI KAISHA, Tokyo 146-8501 (JP)
(72) Inventor: HIGASHI, Hidenori, Tokyo, 146-8501 (JP)
(74) Representative: TBK

(57) **Abstract**

An imaging device capable of securing a time required to generate an electronic signature includes an imaging unit configured to capture a video, a video setting unit configured to perform setting for video data captured by the imaging unit, and an electronic signature generation unit configured to generate an electronic signature based on the video data, in which the video setting unit changes the setting of the video data based on a time required to generate the electronic signature.

## Description

### BACKGROUND OF THE INVENTION

### Field of the Invention

The present invention relates to an imaging device, an imaging method, a storage medium, and the like.

### Description of the Related Art

It has become easy to edit and tamper with images using smartphones and PCs, and the images are so natural that the human eye cannot tell whether they have been edited or tampered with.

For this reason, in use cases and scenes where evidence is questioned against images, it is becoming increasingly important to technically guarantee that images are captured with reliable cameras with guaranteed security and that the images have not been edited or tampered with.

However, when an editing/tampering detection function is added to an image captured by a camera and stored, it is not possible to eliminate the possibility that editing or tampering may occur between the time when the image is stored and the time when the editing/tampering detection function is added.

In such cases, it is not technically possible to prove that the image has not been edited or tampered with since the image has been captured by the camera. For this reason, it is significantly important to add, within the camera, a function of detecting editing or tampering of an image at the stage when the image is captured by the camera.

In response to this, there is technology for generating an electronic signature for an image and detecting editing or tampering of the image. For example, Japanese Patent Application Laid-Open No. 2017-41841 discloses a configuration in which an electronic signature for an image is generated within a camera and the image and the electronic signature are transmitted together.

In addition, Japanese Patent Application Laid-Open No. 2010-245590 discloses a configuration in which an electronic signature is generated for a plurality of frames at once depending on circumstances such as a CPU usage rate of an electronic signature generation device, memory usage, and the frequency of video data transmitted to the electronic signature generation device.

However, in the related art disclosed in Japanese Patent Application Laid-Open No. 2017-41841, an electronic signature is generated for every captured image frame, and thus a period of time for which the electronic signature is generated becomes a bottleneck, making it difficult to achieve a high frame rate.

Furthermore, in the related art disclosed in Japanese Patent Application Laid-Open No. 2010-245590, it is not possible to guarantee that an electronic signature has not been tampered with when it is generated, and thus it is not possible to guarantee that an image has been edited or tampered with since it has been captured by a camera.

### SUMMARY OF THE INVENTION

An imaging device includes an imaging unit configured to capture a video, a video setting unit configured to perform setting for video data captured by the imaging unit, and an electronic signature generation unit configured to generate an electronic signature based on the video data, in which the video setting unit changes the setting of the video data based on a time required to generate the electronic signature.

Further features of the present invention will become apparent from the following description of embodiments with reference to the attached drawings.

### BRIEF DESCRIPTION OF THE DRAWINGS

Fig. 1 is a functional block diagram of a camera 100 and the like as an imaging device according to a first embodiment of the present invention.
Figs. 2A and 2B are diagrams showing GOP intervals and a time required to generate an electronic signature according to the first embodiment of the present invention.
Fig. 3 is a flowchart showing an imaging method according to the first embodiment of the present invention.
Fig. 4 is a diagram showing changes in a GOP interval when a dynamic GOP is validated.
Fig. 5 is a flowchart showing an imaging method according to a second embodiment of the present invention.
Figs. 6A and 6B are diagrams showing a frame rate and a time required to generate an electronic signature according to a third embodiment of the present invention.
Fig. 7 is a flowchart showing an imaging method according to the third embodiment of the present invention.

### DESCRIPTION OF THE EMBODIMENTS

Hereinafter, with reference to the accompanying drawings, favorable modes of the present invention will be described using Embodiments. In each diagram, the same reference signs are applied to the same members or elements, and duplicate description will be omitted or simplified.

### <First Embodiment>

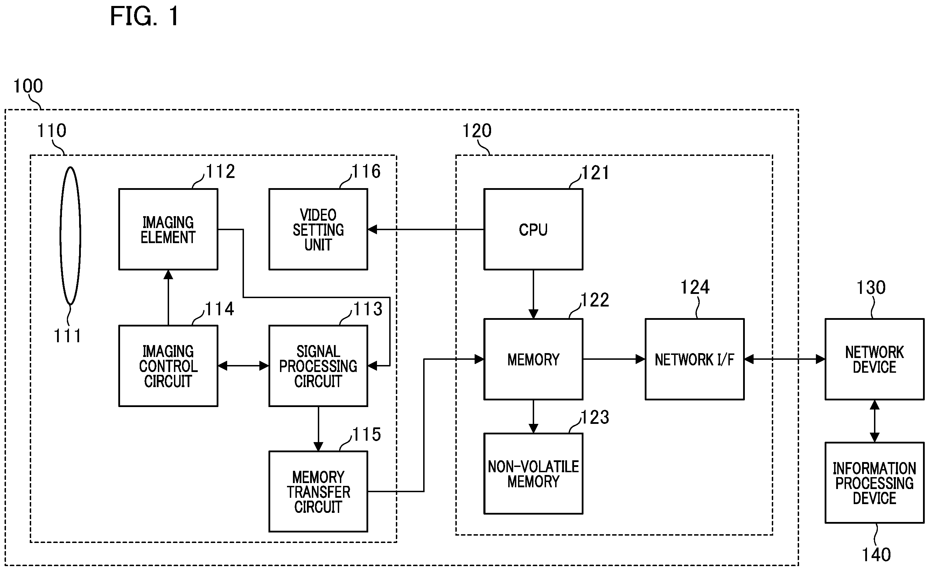

Fig. 1 is a functional block diagram of a camera 100 and the like as an imaging device according to a first embodiment of the present invention. The camera 100 according to an example of the present invention will be described below with reference to Fig. 1.

Some of the functional blocks shown in Fig. 1 are realized by causing a CPU, which is a computer included in the camera 100, to execute a computer program stored in a memory which is a storage medium.

However, some or all of them may be realized by hardware. As the hardware, a dedicated circuit (ASIC) or a processor (reconfigurable processor, DSP), or the like can be used. Furthermore, the functional blocks shown in Fig. 1 do not need to be built into the same housing, and may be constituted by separate devices connected to each other via signal paths.

Further, in the first embodiment, a hash value of a captured image is calculated to create an electronic signature for in units of a group of pictures (GOP), and the electronic signature is stored in an SEI frame of H.264 or H.265. In addition, a GOP interval and a frame rate are controlled.

A GOP usually is constituted by a plurality of consecutive frames starting with an intraframe, which is a frame in which inter-prediction cannot be used. Except for the first intraframe, the rest are usually interframes (for example, P pictures and B pictures) in which inter-prediction can be used. Intra prediction is mainly used in intraframes.

In interframes, both inter-prediction and intra-prediction are mainly used. The GOP interval can also be said to be the number of frames included in one GOP. In other words, the GOP interval can also be said to be the number of frames from a certain intraframe to the next intraframe.

In Fig. 1, the camera 100 transfers images from an imaging unit 110 that captures a video to a controller unit 120, stores the images in a non-volatile memory 123, and distributes the images to an external information processing device 140 via a network.

The imaging unit 110 of the camera 100 includes an optical system 111, an imaging element 112, a signal processing circuit 113, an imaging control circuit 114, a memory transfer circuit 115, and a video setting unit 116 that sets a GOP interval and a frame rate.

The imaging element 112 is, for example, a CMOS image sensor, and converts light imaged through the optical system 111 into charge to generate an imaging signal. The signal processing circuit 113 inputs the imaging signal imaged by the imaging element 112 and digitizes it to generate a captured image.

The imaging control circuit 114 controls the imaging element 112 at the same cycle as an image output cycle. In addition, when the accumulation time of the imaging element 112 is longer than the image output cycle, the signal processing circuit 113 is controlled so that the captured image is stored in a frame memory in the signal processing circuit 113 during a period in which the imaging element 112 cannot output an imaging signal.

The memory transfer circuit 115 transfers the captured image digitized by the signal processing circuit 113 to a memory 122 in the controller unit 120.

The video setting unit 116 performs various settings related to video data captured sequentially by the imaging unit 110 of the camera in response to instructions from the CPU 121 in the controller unit 120 of the camera to be described later. The various settings related to the video include a resolution, a frame rate, a luminance, setting of validation or invalidation of a dynamic GOP, group settings of video data (GOP settings), and the like.

Validating a dynamic GOP indicates that a GOP interval is changed depending on the state of a video signal (for example, a difference between frames, or the like). In the present embodiment, it is possible to switch between validation and invalidation of a dynamic GOP, and when the dynamic GOP is invalidated, a GOP interval is not changed depending on the state of a video signal (for example, a difference between frames, or the like).

The controller unit 120 of the camera 100 includes a CPU 121 which is a computer, a memory 122 which is a storage medium, a non-volatile memory 123, a network I/F 124, and the like.

The CPU 121 performs calculations using a hash function for encryption of image data in the memory 122, and generates an electronic signature using a private key (not shown) of the camera 100. In the present embodiment, the calculation of the hash function and the generation of the electronic signature are executed by the CPU 121, but may be performed by a module different from the CPU 121.

A network device 130 enables communication between the camera 100 and the external information processing device 140 via the network I/F 124. The network device 130 is, for example, a switching hub or the like, and the external information processing device 140 is, for example, a PC or computer device that stores images.

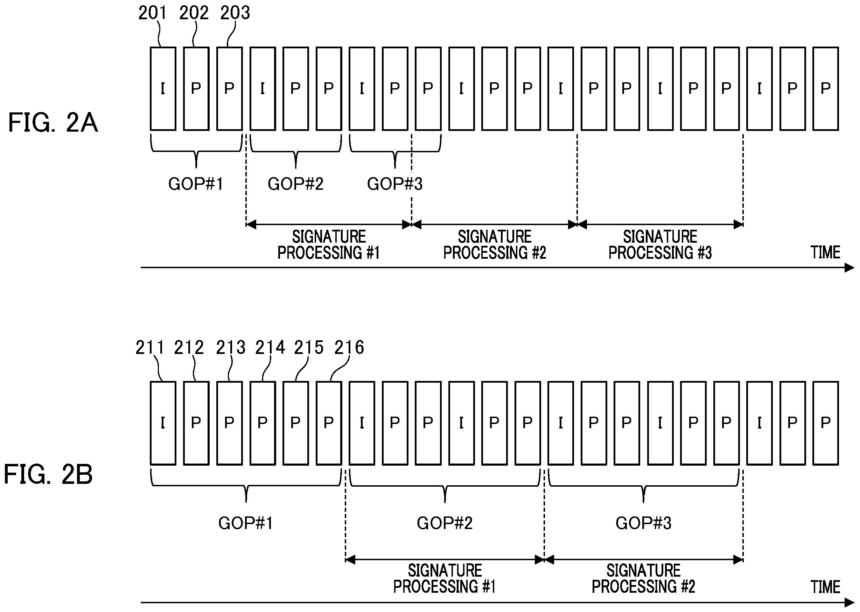

Figs. 2A and 2B are diagrams showing GOP intervals and a time required to generate an electronic signature according to the first embodiment of the present invention. Below, with reference to Fig. 2, description will be given of a GOP interval and a time required to generate an electronic signature in a case when an electronic signature for an image is generated in a camera in units of GOP, and the image and the electronic signature are transmitted together in real time.

In Fig. 2A, a case where a GOP interval is 3 frames will be described as an example. In this case, an I picture (basic frame 201) and P pictures (complementary frame 202, complementary frame 203) constitute GOP#1.

Here, when a time corresponding to five frames is required to generate an electronic signature in the camera, time required for signature processing is two frames longer than the GOP interval as shown in Fig. 2A, and thus it is not possible to transmit an image and an electronic signature together for each GOP in real time.

Consequently, in the first embodiment, a GOP interval is changed depending on a processing time required for signature processing, and thus it is possible to stably write a signature and transmit it for each GOP in real time.

That is, as shown in Fig. 2B, a GOP interval is changed to six frames. Thereby, for example, GOP#1 is constituted by an I picture (basic frame 211) and P pictures (complementary frame 212, complementary frame 213, complementary frame 214, complementary frame 215, complementary frame 216).

Here, when a time corresponding to five frames is required to generate an electronic signature in the camera, a processing time required for signature processing is one frame shorter than the GOP interval, and thus the electronic signature can be processed in synchronization with the GOP interval as shown in Fig. 2B. That is, electronic signature processing #1 and #2 can be executed in accordance with the periods of GOP#2 and GOP#3, respectively. Thus, it is possible to write a signature and transmit it for each GOP in real time.

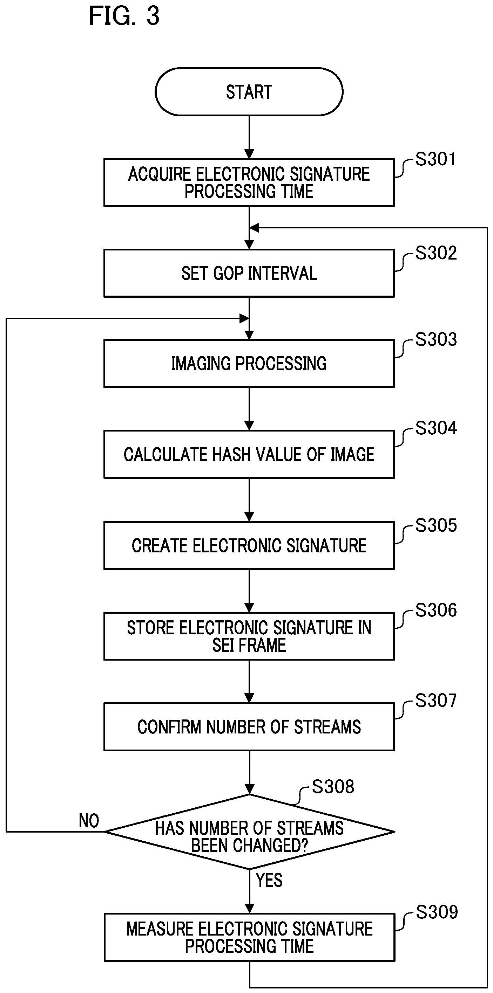

Fig. 3 is a flowchart showing an imaging method according to the first embodiment of the present invention. The CPU 121 which is a computer in the camera 100 executes a computer program stored in the memory, so that operations of steps in the flowchart of Fig. 3 are sequentially performed.

In the flow of Fig. 3, when the setting of a dynamic GOP is invalidated and the number of streams output by the camera is changed, an electronic signature processing time is measured, and a GOP interval appropriate for the electronic signature processing time is set. A flow in the first embodiment of the present invention will be described with reference to Fig. 3.

When the camera 100 is turned on and imaging is started, the flow in Fig. 3 is started. Then, in step S301, the CPU 121 of the camera acquires a processing time required to generate an electronic signature. The processing time required to generate the electronic signature may be recorded in a camera body at the time of shipment from the factory, or the like, or may be measured when the camera is started up.

In step S302, the CPU 121 of the camera sets a GOP interval on the basis of the time required to generate the electronic signature which is acquired in step S301 so that the GOP interval is equal to or greater than the processing time required to generate the electronic signature.

That is, in step S302, the video setting unit 116 changes the setting of the GOP interval as the setting of video data on the basis of the time required to generate the electronic signature. Here, step S302 functions as a video setting step of performing setting of video data captured sequentially in the imaging step.

Next, in step S303, the CPU 121 of the camera performs imaging processing of images captured by the imaging unit 110, and sequentially transfers the images to the memory 122 in the controller unit 120 by the memory transfer circuit 115. Here, step S303 functions as an imaging step of capturing a video.

In step S304, the CPU 121 of the camera calculates a hash value of an image transferred to the memory 122. Here, step S304 functions as a hash generation step (hash generation unit) that generates hash values of pieces of video data captured sequentially by the imaging unit.

In step S305, the CPU 121 of the camera encrypts the hash values generated in step S304 with a private key stored in the camera 100, and creates an electronic signature. Here, step S305 functions as an electronic signature generation step (electronic signature generation unit) that generates an electronic signature on the basis of the video data.

In step S306, the CPU 121 of the camera stores the electronic signature, which is created in step S305, in an SEI frame supported by, for example, H.264 or H.265.

In step S307, the CPU 121 of the camera confirms the number of streams being output. In step S308, the CPU 121 of the camera determines whether the number of streams has been changed since the previous confirmation, and in the case of Yes, the CPU 121 measures a processing time required for electronic signature processing in step S309.

That is, when the number of streams output by the camera has been changed, a time required to generate an electronic signature is measured by the electronic signature generation unit.

Here, step S309 functions as a measurement step (measurement unit) that measures a time required to generate the electronic signature.

Then, the processing returns to step S302, and a GOP interval is set. On the other hand, when it is determined in step S308 that the number of streams has not been changed since the previous confirmation, the processing returns to step S303, and the CPU 121 of the camera performs imaging processing. A flow from step S302 to step S309 is repeated until it is determined in a power-off determination step (not shown) that the camera has been turned off.

As described above, according to the first embodiment, a GOP interval is changed depending on a processing time required for signature processing, and thus it is possible to stably write a signature and transmit it for each GOP in real time.

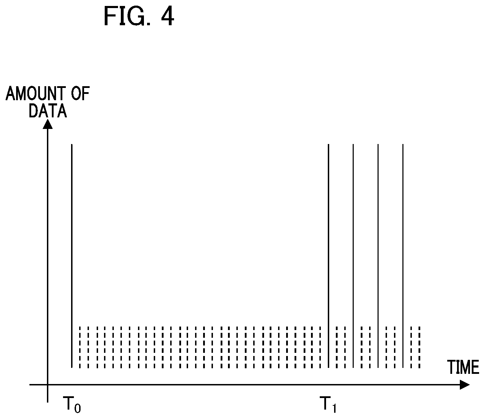

Fig. 4 is a diagram showing changes in a GOP interval when a dynamic GOP is validated. In Fig. 4, a horizontal axis represents a time, a vertical axis represents the amount of data, a solid line indicates an I picture (basic frame), and a dashed line indicates a P picture (complementary frame).

For example, a case where a dynamic GOP is validated and a GOP is changed on the basis of the state of a video signal (for example, a difference between frames, or the like) is considered. In this case, when an outdoor scene with little movement is imaged, a difference between frames is small, and thus a large number of P pictures (complementary frames) are inserted between an I picture (basic frame) and the next I picture (basic frame). That is, the GOP interval becomes wider, and thus the amount of data can be reduced.

That is, in Fig. 4, for example, a dynamic GOP can be validated between times T0 and T1 to reduce the amount of data. However, for example, when there is rain or snowfall after time T1, a difference between frames increases, and thus a GOP interval becomes shorter.

That is, even when a GOP interval that is sufficient for the camera to generate an electronic signature is set between times T0 and T1, a GOP interval may become shorter than a time required for the camera to generate an electronic signature after time T1.

### <Second embodiment>

A second embodiment is an embodiment for solving the above-described problems, and when a dynamic GOP is valid and a GOP interval is changed depending on the state of a video signal (for example, a difference between frames, or the like), an electronic signature processing time is measured. Then, a lower limit value of the GOP interval is set.

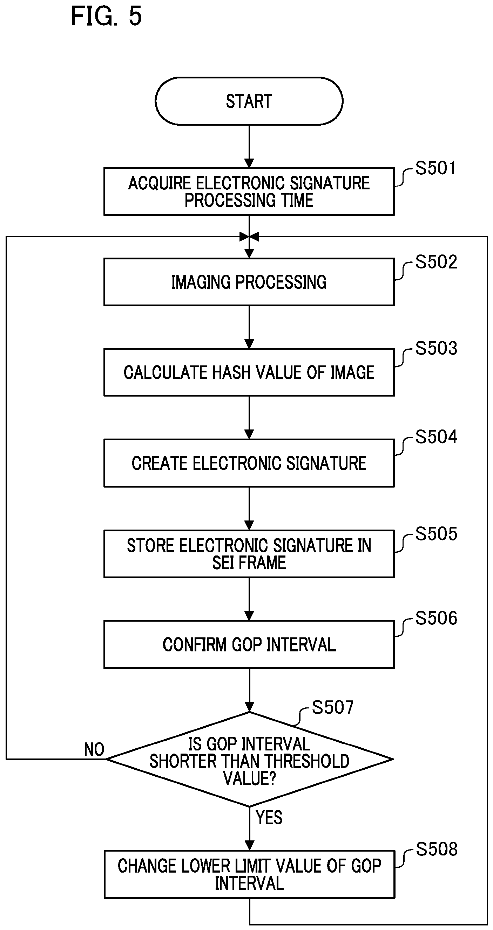

Fig. 5 is a flowchart showing an imaging method according to the second embodiment of the present invention. Operations of steps in the flowchart of Fig. 5 are sequentially performed by a CPU 121, which is a computer in a camera 100, executing a computer program stored in the memory.

When the camera 100 is turned on and imaging is started, the flow in Fig. 5 is started. Then, in step S501, the CPU 121 of the camera acquires a processing time required to generate an electronic signature. The time required to generate the electronic signature may be recorded in a camera body at the time of shipment from the factory or the like, or may be measured when the camera is started up.

Next, in step S502, the CPU 121 of the camera performs imaging processing of images captured by an imaging unit 110, and sequentially transfers the images to a memory 122 in a controller unit 120 by a memory transfer circuit 115.

In step S503, the CPU 121 of the camera calculates a hash value of an image transferred to the memory 122. In step S504, the CPU 121 of the camera encrypts the hash value calculated in step S503 with a private key stored in the camera 100 to create an electronic signature.

In step S505, the CPU 121 of the camera stores the electronic signature created in step S504 in an SEI frame that is supported by, for example, H.264 or H.265.

In step S506, the CPU 121 of the camera confirms the GOP interval, which changes depending on an imaging scene or the like due to the dynamic GOP. Then, in step S507, the CPU 121 of the camera determines whether the GOP interval is shorter than a predetermined threshold value.

When a determination result in step S507 is Yes, the CPU 121 of the camera changes a lower limit value of the GOP interval to a value greater than the current value in step S508. That is, in step S508, the lower limit value of the GOP interval when the setting of a dynamic GOP is valid.

Then, the processing returns to step S502 and imaging processing is performed again. When it is determined in step S507 that the GOP interval is not shorter than the predetermined threshold value, the processing returns to step S502 and imaging processing is performed.

In this manner, in the second embodiment, when a dynamic GOP is valid and a GOP interval is changed depending on the state of a video signal (for example, a difference between frames or the like), an electronic signature processing time is measured, and a lower limit value of the GOP interval is set. Thus, an image and an electronic signature can be transmitted in real time by matching the timings thereof.

When the setting of a dynamic GOP is valid and a GOP interval is set to be shorter than a predetermined value, a time required to generate an electronic signature by the electronic signature generation unit may be measured.

### <Third Embodiment>

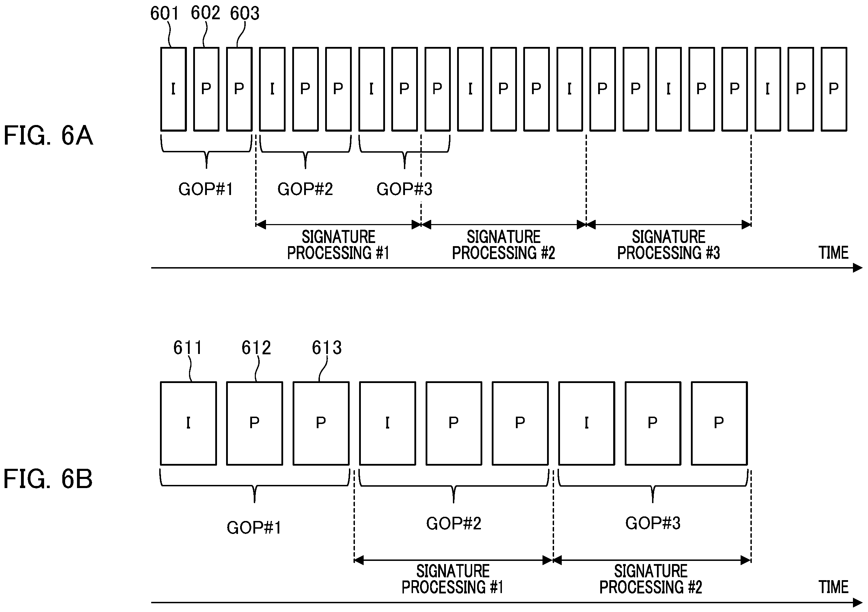

Next, Figs. 6A and 6B are diagrams showing a frame rate and a time required to generate an electronic signature according to a third embodiment. Below, with reference to Fig. 6, description will be given of a case where a GOP interval and a time required to generate an electronic signature when an electronic signature for an image is generated in a camera in units of GOP, and the image and the electronic signature are transmitted together in real time.

In Fig. 6A, as an example, when a frame rate is 30 FPS and a GOP interval is three frames, an I picture (basic frame) 601 and P pictures (complementary frame 602, complementary frame 603) constitute GOP#1. Here, it is assumed that a time corresponding to five frames is required to generate an electronic signature in the camera at a frame rate of 30 FPS.

Then, a time required for signature processing is two frames longer than the GOP interval as shown in Fig. 6A, and thus an image and an electronic signature cannot be transmitted together in real time. Consequently, in the third embodiment, as shown in Fig. 6B, when the GOP interval is shorter than a predetermined value due to a dynamic GOP, the GOP interval is set to, for example, three frames at a frame rate of 15 FPS.

That is, the frame rate is lowered. In this case, an I picture (basic frame) 611 and P pictures (complementary frame 612, complementary frame 613) constitute GOP#1.

Thereby, when a processing time corresponding to five frames is required to generate an electronic signature in the camera at a frame rate of 30 FPS, a processing time required for signature processing is shorter than a GOP interval (three frames at a frame rate of 15 FPS). Thus, as shown in Fig. 6B, an image and an electronic signature can be transmitted together in real time by matching the timings thereof.

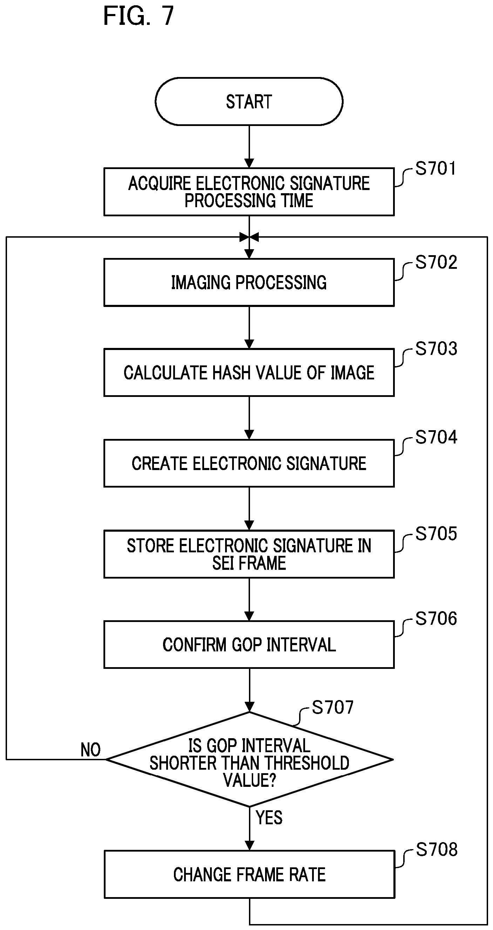

Fig. 7 is a flowchart showing an imaging method according to the third embodiment of the present invention. Operations of steps in the flowchart of Fig. 7 are sequentially performed by a CPU 121, which is a computer in a camera 100, executing a computer program stored in a memory.

In the flow shown in Fig. 7, when a dynamic GOP is valid and a GOP interval changes depending on a video signal, an electronic signature processing time is measured, and a frame rate is changed.

When the camera 100 is turned on and imaging is started, the flow in Fig. 7 is started. Then, in step S701, the CPU 121 of the camera acquires a processing time required to generate an electronic signature. The time required to generate the electronic signature may be recorded in a camera body at the time of shipment from the factory or the like, or may be measured when the camera is started up.

Next, in step S702, the CPU 121 of the camera performs imaging processing of images captured by an imaging unit 110, and sequentially transfers the images to a memory 122 in a controller unit 120 by a memory transfer circuit 115.

In step S703, the CPU 121 of the camera calculates a hash value of an image transferred to the memory 122. In step S704, the CPU 121 of the camera encrypts the hash value calculated in step S703 with a private key stored in the camera 100 to create an electronic signature.

In step S705, the CPU 121 of the camera stores the electronic signature created in step S704 in an SEI frame that is supported by, for example, H.264 or H.265.

In step S706, the CPU 121 of the camera confirms the GOP interval, which changes depending on an imaging scene or the like due to the dynamic GOP. Then, in step S707, the CPU 121 of the camera determines whether the GOP interval is shorter than a predetermined threshold value.

When a determination result in step S707 is Yes, the CPU 121 of the camera changes a frame rate to a value lower than the current value in step S708. That is, frame rate setting is performed as video data setting.

Then, the processing returns to step S702 and imaging processing is performed again. When it is determined in step S707 that the GOP interval is not shorter than the predetermined threshold value, the processing returns to step S702 and imaging processing is performed.

As described above, in the third embodiment, when a dynamic GOP is valid and a GOP interval changes depending on a video signal, an electronic signature processing time is measured, and a frame rate is changed. Thus, even in the case of a dynamic GOP in which a GOP interval is set depending on the usage status of the camera and an imaging scene, it is possible to generate an electronic signature for an image in the camera in units of GOP and transmit the image and electronic signature together in real time.

When an electronic signature for an image is generated in the camera in units of GOP, and the image and the electronic signature are transmitted together in real time, processing for the electronic signature may not be completed in time when a GOP interval is shorter than a predetermined value. A private key used to generate the electronic signature in the camera is not allowed to leak out of the camera, and thus it may be difficult to place the private key at all times in a memory area that can be accessed at high speed.

On the other hand, according to the first to third embodiments described above, when an image captured by a camera is edited or tampered with, it is possible to detect the editing or tampering by using an electronic signature.

Even when a dynamic GOP is set depending on the usage status of a camera or an imaging scene, an electronic signature for an image can be generated in the camera in units of GOP by setting a GOP interval and a frame rate to secure a time required to create the electronic signature. Thus, it is possible to transmit the image and the electronic signature together in real time. In addition, when an image captured by the camera is edited or tampered with, it is possible to detect the editing or tampering.

While the present invention has been described with reference to exemplary embodiments, it is to be understood that the invention is not limited to the disclosed exemplary embodiments. The scope of the following claims is to be accorded the broadest interpretation to encompass all such modifications and equivalent structures and functions.

In addition, as a part or the whole of the control according to the embodiments, a computer program realizing the function of the embodiments described above may be supplied to the imaging device and the like through a network or various storage media. Then, a computer (or a CPU, an MPU, or the like) of the imaging device and the like may be configured to read and execute the program. In such a case, the program and the storage medium storing the program configure the present invention.

In addition, the present invention includes those realized using at least one processor or circuit configured to perform functions of the embodiments described above. For example, a plurality of processors may be used for distribution processing to perform functions of the embodiments described above.

This application claims the benefit of priority from Japanese Patent Application No. 2023-171446, filed on October 2, 2023, which is hereby incorporated by reference herein in its entirety.

## Claims

1. An imaging device comprising at least one processor or circuit configured to function as:
an imaging unit configured to capture a video;
a video setting unit configured to perform setting for video data captured by the imaging unit; and
an electronic signature generation unit configured to generate an electronic signature based on the video data,
wherein the video setting unit changes the setting of the video data based on a time required to generate the electronic signature.

2. The imaging device according to claim 1, wherein
the at least one processor or circuit is further configured to function as a hash generation unit configured to generate a hash value of the video data captured by the imaging unit, and
the electronic signature generation unit encrypts the hash value generated by the hash generation unit to generate the electronic signature.

3. The imaging device according to claim 1, wherein the at least one processor or circuit is further configured to function as a measurement unit configured to measure a time required to generate an electronic signature.

4. The imaging device according to claim 3, wherein the measurement unit measures a time required to generate the electronic signature by the electronic signature generation unit when the number of streams output by a camera is changed.

5. The imaging device according to claim 3, wherein the measurement unit measures a time required to generate the electronic signature by the electronic signature generation unit when a GOP interval becomes shorter than a predetermined value in a case where the setting of a dynamic GOP is valid.

6. The imaging device according to claim 1, wherein the video setting unit sets a GOP interval or a frame rate as the setting of the video data.

7. The imaging device according to claim 1, wherein the video setting unit sets the validation or invalidation of dynamic GOP setting.

8. The imaging device according to claim 1, wherein the video setting unit sets a GOP interval in a case where dynamic GOP setting is invalid.

9. The imaging device according to claim 1, wherein the video setting unit sets a lower limit value of a GOP interval in a case where dynamic GOP setting is valid.

10. An imaging method comprising:
an imaging process of capturing a video;
a video setting process of performing setting for video data captured by the imaging process; and
an electronic signature generation process of generating an electronic signature based on the video data,
wherein the video setting process includes changing the setting of the video data based on a time required to generate the electronic signature.

11. A non-transitory computer-readable storage medium storing a computer program including instructions for executing the following processes:
an imaging process of capturing a video;
a video setting process of performing setting for video data captured by the imaging process; and
an electronic signature generation process of generating an electronic signature based on the video data,
wherein the video setting process includes changing the setting of the video data based on a time required to generate the electronic signature.
